# FASCICULE DE BREVET EUROPEEN

(11) **EP 0 674 942 B1**
(45) Date de publication et mention de la délivrance du brevet: **07.01.1999**
(21) Numéro de dépôt: 95400705.0
(22) Date de dépôt: 29.03.1995
(51) Int. Cl.: B01J 13/10, B41M 5/165

(54) **Procédé de production de microcapsules à fort taux d'extrait sec contenant un liquide hydrophobe, microcapsules obtenues par ledit procédé et procédé d'obtention d'un papier sensible à la pression à l'aide de ces microcapsules**
Verfahren zur Herstellung von hydrophoben Flüssigkeit enthaltenden Mikrokapseln mit einem hohen Trockenextraktgehalt, so erhaltene Mikrokapseln und Verfahren zur Herstellung von druckempfindlichen Papier damit
Process for the production of hydroprobic liquid containing microcapsules with a high dry extract content, thus obtained microcapsules and process for obtaining pressure sensitive paper therewith

(30) Priorité: 31.03.1994 FR 9403838
(43) Date de publication de la demande: 04.10.1995
(73) Titulaire: COPIGRAPH, 45330 Malesherbes (FR)
(72) Inventeur: Habar, Gérard, F-77780 Bourron Marlotte (FR); Le Pape, Alain, F-77760 Nanteau sur Essonne (FR); Descusse, Catherine, F-45300 Pithiviers-le-Vieil (FR)
(74) Mandataire: Ahner, Francis

(56) Documents cités:
- EP-A- 0 025 379
- EP-A- 0 038 985
- EP-A- 0 339 866
- GB-A- 1 573 361
- US-A- 5 064 470
- DATABASE WPI Week 3577 Derwent Publications Ltd., London, GB; AN 77-61994Y & JP-A-52 085 984 (CARBON PAPER)

## Description

La présente invention concerne un procédé de production de microcapsules contenant un liquide hydrophobe. Elle concerne également des microcapsules obtenues par ledit procédé comportant un taux élevé d'extrait sec, notamment entre 30 et 40 % et un procédé d'obtention d'un papier sensible à la pression à l'aide d'une composition de revêtement contenant de telles microcapsules.

Selon un procédé classique, on forme une émulsion d'une phase hydrophobe constituée d'une solution organique d'une substance chromogène dans une phase aqueuse basique comportant plusieurs colloïdes dont la gélatine et un ou plusieurs autres colloïdes anioniques parmi lesquels on peut citer la carboxyméthylcellulose (CMC) et un copolymère de l'anhydride maléïque tel qu'un copolymère de l'éthervinylméthylique et de l'anhydride maléïque (PVMMA) ou un copolymère de l'éthylène et de l'anhydride maléïque (EMA).

On élève ensuite la température et l'on procède à la coacenvation de l'émulsion par ajout d'un acide approprié notamment l'acide acétique afin de régler le pH aux environs de 4. Des microcapsules à paroi liquide se constituent ainsi par formation du coacervat autour des gouttelettes d'huile émulsionnée. Le refroidissement du mélange jusqu'à environ 10°C provoque la solidification des parois de coacervat liquide.

On ajoute ensuite un agent de durcissement comme le formol ou le glutaraldéhyde afin de réticuler lesdites parois solides de coacervat et obtenir les microcapsules souhaitées.

Il est ensuite possible d'ajouter des liants et d'autres ingrédients classiques adaptés à la suspension de microcapsules pour obtenir une composition de revêtement pour papier sensible à la pression.

Ce procédé classique permet d'obtenir des microcapsules en grappes (paquets de 5 à 20 microcapsules) dont la teneur en solide est limitée à 21 %, voire à 24% au maximum. Dans le contexte de cette description la teneur en solide est utilisée pour désigner tous les composants non aqueux constituant les microcapsules y compris le solvant organique dans lequel le chromogène est en solution.

De tels procédés sont décrits par exemple dans les demandes de brevets européens EP-A-0 025 379 et EP-A-0 038 985.

C'est pour cette raison que les procédés d'encapsulation à base de gélatine ont, dans le passé, été abandonnés pour des procédés à base de résines synthétiques, principalement du type mélamine formol ou polyuréthane.

Cependant, pour plusieurs raisons, notamment liées à la préservation de l'environnement, il serait souhaitable d'obtenir des microcapsules dont la teneur en solide soit plus élevée, tout en utilisant le procédé de production à base de gélatine.

On a notamment proposé dans le brevet européen EP-B-339 866, d'utiliser lors de la mise en oeuvre du procédé de production de microcapsules, une CMC possédant une viscosité variant de 50 à 140 mPa.s (cps) mesurée dans une solution aqueuse à 6 % en poids et à 20°C en utilisant un viscosimètre BROOKFIELD RVT (broche n° 1 à 10 t.p.m.) et un rapport pondéral gélatine : CMC variant de 1:0,14 à 1:0,05.

Cette carboxyméthylcellulose de faible viscosité permet de diminuer la viscosité globale du mélange lors notamment des étapes de coacervation et de refroidissement.

Néanmoins, ce procédé ne permet pas de dépasser 30 % d'extrait sec, et à cette valeur la viscosité de l'émulsion est élevée.

Le taux d'encapsulation obtenu et l'étanchéité des microcapsules sont peu élevées et ne permettent que très difficilement la fabrication en un seul passage de l'autonome. L'autonome est le papier comportant sur la même face le chromogène encapsulé et le réactif développant ce chromogène appelé CF.

D'autre part, la tenue au vieillissement de ces microcapsules n'est pas suffisante compte tenu de l'hydrophilie excessive de leur paroi. Enfin, les capsules obtenues sont sous forme de grappes, qui sont sensibles au cisaillement et perdent une partie de leurs performances au cours de leur transformation (agitations - pompages - couchage).

Une variante de ce procédé consiste à utiliser un deuxième colloïde protecteur après la phase de coacervation. Parmi ces colloïdes, sont cités le copolymère de l'éthylène et de l'anhydride maléique (EMA) ou le copolymère de l'éther vinylméthylique et de l'anhydride maléique (PVMMA). En principe, on peut également utiliser l'acide polyacrylique. Cette variante permet d'augmenter l'extrait sec jusqu'à 30 %, mais toujours avec des microcapsules en grappes.

La demande de brevet JP-A-52 085 984 décrit également un procédé similaire faisant intervenir un second colloïde anionique qui peut être un acide polyacrylique.

La demande de brevet JP-A-52085984 ou le brevet britannique correspondant n° 1 573 361 décrivent un procédé faisant intervenir un second colloïde anionique qui peut être un acide polyacrylique. D'après ce document, le procédé comprend la formation d'une émulsion d'une substance hydrophobe dans une solution colloïdale aqueuse d'un colloïde protecteur cationique (gélatine), mélange avec une carboxyméthylcellulose en solution aqueuse pour obtenir un premier film encapsulant de colloïde protecteur sur les gouttelettes dispersées de substance hydrophobe. Puis on mélange le coacervat résultant avec une solution aqueuse d'un polymère hydrosoluble ayant des groupes carboxyliques (acide polyacrylique) pour former un second film encapsulant, on refroidit et on durcit au moyen d'un agent durcissant.

Le taux d'extrait sec obtenu est de l'ordre de 20 %.

L'invention se propose de remédier aux inconvénients précités, et a pour objet :
- d'obtenir des microcapsules à teneur en extrait sec élevée notamment de 30 à 40 %, notamment pour des microcapsules comportant des carboxyméthylcelluloses de viscosité moyenne à élevée, notamment supérieure à 200 mPas mesurée comme indiqué précédemment (il y a lieu de préciser que la notion d'extrait sec s'applique à la dispersion de microcapsules obtenues par le procédé selon l'invention),
- d'améliorer les performances du papier sensible à la pression obtenu à l'aide de ces microcapsules, notamment dans le domaine de l'autonome,
- d'augmenter le taux d'encapsulation et la tenue du papier en atmopshère chaude et humide.
- d'obtenir des microcapsules isolées et non des grappes présentant une courbe granulométrique resserrée et une bonne résistance au cisaillement. La qualité des microcapsules est également nettement améliorée par rapport au procédé classique.

L'invention concerne en premier lieu un procédé de production de microcapsules contenant un liquide hydrophobe, caractérisé en ce qu'il comprend les étapes suivantes :
- formation d'une suspension dans une phase aqueuse acide de particules constituées de gouttelettes dudit liquide hydrophobe, lesdites gouttelettes étant revêtues d'un coacervat formé de gélatine, d'un premier colloïde anionique constitué par un homopolymère d'un acide polyacrylique de poids moléculaire compris entre 500 et 5000 et d'un second colloïde anionique constitué par de la carboxyméthylcellulose possédant une viscosité de 200 à 3000 mPas en solution à 6 % en poids et à 20°C, mesurée au viscosimètre Haake VT 181 avec mobile MVI, et lesdites particules ayant un diamètre de 1 à 12 µm environ, de préférence de 3 à 8 µm,
- refroidissement pour solidifier la paroi,
- réticulation de la gélatine,
- neutralisation.

Parmi les liquides hydrophobes, on peut citer les solutions organiques de réactifs chimiques, de produits phyto-sanitaires, de substances actives des médicaments, de parfums et en général toutes les matières premières pouvant se présenter sous forme d'une solution dans un liquide hydrophobe ou se présentant par elles-mêmes sous forme d'un liquide hydrophobe. En ce qui concerne la fabrication des papiers autocopiants, le liquide hydrophobe est une solution organique d'une substance chromogène.

Comme substance chromogène convenant dans le procédé selon l'invention, on peut citer à titre indicatif les dérivés comme le 3,3-bis(4-diméthylaminophényl)-6-diméthylamino-phtalide (CVL) et le 3,3-bis(1-octyl-2-méthylindole-3-yle)phtalide ou des dérivés du fluorane comme les 2-anilino-3 méthyl-6 dialkylamino fluoranes tels que le 2'-anilino-3' méthyl-6 diéthylamino fluorane, le 6'-diméthylamino-2'-( N-éthyl-N-phénylamino-4'-méthylfluorane) et le 3'-chloro-6'-cyclohexylaminofluorane, cette liste étant non limitative et pouvant être étendue à toutes les substances chromogènes couramment utilisées dans l'art considéré.

Les solvants hydrophobes peuvent être choisis, seuls ou en mélange, parmi les solvants suivants : terphényles partiellement hydrogénés, dérivés du diarylméthane, les dérivés alkyl naphtalènes, les dérivés du dibenzylbenzène, les dérivés des alkylbiphényles, les dérivés des Xylylxylènes, les huiles végétales, les esters d'acide gras, les phtalates, les dérivés terpéniques auxquels on peut éventuellement ajouter des diluants comme les kérosènes, les alkyl benzènes, les huiles minérales paraffiniques ou naphténiques,.

Selon une première variante avantageuse, lesdites particules sont obtenues par :
- formation d'une émulsion d'une phase hydrophobe formée d'une solution organique, dans une phase aqueuse à un pH compris entre 6 et 10, dans laquelle est dissoute la gélatine, un premier colloïde anionique constitué par de l'acide polyacrylique, et éventuellement tout ou partie d'un second colloïde anionique constitué par de la carboxyméthylcellulose,
- coacervation de l'émulsion par acidification en présence dudit second colloïde anionique ou du reste dudit second colloïde anionique lorsque celui-ci n'a pas été utilisé ou seulement en partie dans la formation de l'émulsion.

Selon une seconde variante, lesdites particules sont obtenues par :
- formation en milieu acide d'une phase aqueuse formée de gélatine, dudit premier colloïde anionique constitué par l'acide polyacrylique et éventuellement de tout ou partie du second colloïde anionique constitué par de la carboxyméthylcellulose,
- formation d'une émulsion dans ladite phase aqueuse et subséquemment desdites particules à partir d'une phase hydrophobe formée d'une solution organique d'un composé d'intérêt, éventuellement en présence dudit second colloïde anionique lorsque celui-ci n'a pas été utilisé ou seulement en partie dans la formation de la phase aqueuse.

L'étape d'acidification est effectuée de façon connue par ajout d'un acide tel que l'acide acétique de façon à faire descendre le pH à une valeur comprise entre 3 et 5, de préférence aux environs de 4.

Cette étape d'acidification est généralement séparée de l'étape d'émulsion, bien que les deux étapes puissent être effectuées simultanément, en acidifiant par exemple l'une des solutions de colloïde avant la coacervation proprement dite.

D'autres variantes sont également possibles sans sortir du cadre de la présente invention. Il est par exemple possible d'ajouter de façon séquentielle les différents colloïdes, le but étant, dans tous les cas, d'obtenir des particules liquides d'huile de diamètre de 1 à 12 micromètres environ et de préférence de 3 à 8 µm.

De façon générale, la CMC utilisée a des degrés de substitution d'environ 0,7 à environ 1,3, bien que ces valeurs soient données uniquement à titre indicatif. La viscosité de ce colloïde est généralement supérieure à 200 mPas en solution à 6 % en poids et à 20°C mesurée à l'aide d'un viscosimètre Haake VT 181 à cylindres coaxiaux MVI à 180 t/min et de préférence inférieure à 3000 mPas.

La gélatine utilisée a généralement une force en gelée allant de 130 bloom à 200 bloom, de préférence 150 à 170 bloom.

Le premier colloïde anionique est de préférence un homopolymère d'acide acrylique de poids moléculaire compris entre 500 et 5000.

Après refroidissement autour de 8 à 10 °C, on procède a la réticulation de la gélatine par ajout d'un ou plusieurs agents réticulants introduits simultanément ou successivement, dont on peut citer par exemple le formaldéhyde, le glutaraldéhyde, les résines mélamine formol, les tanins minéraux, végétaux ou synthétiques tels ceux utilisés dans l'industrie du cuir.

Selon une variante préférée, pour 100 parties en poids de gélatine on utilise :
a) 10 à 30 parties d'acide polyacrylique, de préférence 12 à 20 parties,
b) 20 à 40 parties de carboxyméthylcellulose (CMC).

De préférence, le rapport de l'agent réticulant à la gélatine est compris entre 10 et 50 % en poids.

Selon une variante particulièrement avantageuse, la réticulation est effectuée en deux étapes :

Dans une première étape, on ajoute au coacervat refroidi le glutaraldéhyde à pH acide, de façon à rendre irréversible la structure du coacervat. Cette réaction effectuée lentement à froid permet au réactif de pénétrer l'épaisseur de la paroi et ainsi de réagir sur l'ensemble de celle-ci et d'éviter l'épaississement de l'émulsion.

Cette étape est suivie d'une réticulation par un réactif différent du premier, qui de préférence agit sur d'autres groupes chimiques du coacervat ou sur les mêmes mais par d'autres types de réactions.

Cette deuxième réticulation permet de durcir la paroi des microcapsules et de la rendre parfaitement étanche. Elle peut être conduite dans des conditions différentes de température et de pH que la première car la structure est déjà bloquée et n'est plus réversible. Pour cette deuxième réticulation on choisit notamment les tanins connus dans l'art.

Parmi les tanins utilisables dans la présente invention, on peut citer :
- à titre de tanins minéraux, ceux à base d'aluminium, de zirconium, de chrome, de titane, de magnésium et leurs mélanges,
- à titre de tanins végétaux, ceux à base d'acides tannique ou gallique,
- à titre de tanins synthétiques, ceux du type phénolique ou aziridine ou les résines mélamines formol ou urée formol ou dicyandiamide formol ou les dérivés aromatiques du type acide polynaphtyl-méthane-sulfoniques.

De préférence, le rapport en poids du glutaraldéhyde à la gélatine sera compris entre 10 et 20 % et celui du tanin à la gélatine entre 10 et 40 %.

L'invention a également pour objet les microcapsules obtenues par le procédé décrit ci-dessus et qui de préférence ont une teneur en extrait sec compris entre 30 et 40 % et un diamètre compris entre 1 et 12 µm, de préférence 3 et 8 µm.

Par ailleurs, l'invention a également pour objet un procédé de production de papier sensible à la pression caractérisé en ce que l'on couche une composition de revêtement contenant les microcapsules sus-mentionnées et un véhicule inerte à base d'un liant et/ou d'additifs appropriés à cette fabrication.

Il a été trouvé que les papiers sensibles à la pression comportant de telles microcapsules présentaient une meilleure sensibilité et une meilleure définition de l'écriture ainsi qu'une meilleure résistance aux attaques des microorganismes.

Par ailleurs, le vieillissement est amélioré et permet d'arriver à des résultats équivalents ou même supérieurs à ceux des capsules synthétiques obtenues par les procédés utilisés actuellement.

Les microcapsules selon l'invention dont le taux d'extrait sec est compris entre 30 et 40 % permettent un gain de productivité approchant les 100 % par rapport au procédé classique à base de gélatine, ce qui entraîne un gain d'énergie (couchage plus concentré) et une amélioration de la qualité du couchage (moins d'eau déposée sur le papier).

Par ailleurs, les capsules se présentent sous forme isolée et non pas sous forme de grappes, ce qui améliore leur tenue au cisaillement et la résolution de la reproduction.

L'invention est maintenant illustrée par les exemples suivants :

### Exemple 1

Dans un litre d'eau désioniée à 40 °C, on introduit sous agitation 55 g de gélatine d'une valeur bloom d'environ 160. On chauffe entre 40 et 50°C jusqu'à dissolution totale de la gélatine, puis on ajoute 18,5 g d'homopolymère d'acide acrylique de poids moléculaire d'environ 1800 (Coatex Gx). On amène le pH à 8 par ajout de soude à 20 %.

En parallèle on prépare une phase organique hydrophobe, par chauffage entre 100 et 130°C pendant 1 heure, le mélange suivant:
700 g de diisopropylnaphtalène,
145 g de kérosène,
35 g de Cristal Violet Lactone
7 g de Bleu B.L.M.B.

On mélange la phase organique et la phase aqueuse sous agitation et on émulsionne jusqu'à obtention de particules ayant un diamètre moyen compris entre 5 et 6 micromètres.

On mélange ensuite dans un réacteur thermostatique, muni d'un agitateur, l'émulsion obtenue précédemment et une solution de 17 g de carboxyméthylcellulose de viscosité 250 mPas (mesurée comme indiqué précédemment) dans 625 ml d'eau désionisée.

On élève la température à 60°C et l'on ajoute de l'acide acétique de manière à ajuster le pH à 4,3. On refroidit le coacervat à 8°C et on maintient à cette température durant 10 heures. Le durcissement des parois est effectué en deux étapes :

### 1ère étape

Addition de 17 g de glutaraldéhyde à 50 % sous forte agitation.

### 2ème étape

Addition 4 h plus tard de 66 g d'une solution à 26 % d'alun de chrome. On maintient la température à 8°C pendant 16 heures ainsi qu'une bonne agitation avant de remonter le pH à 7 à la température de 20°C.

Les microcapsules obtenues sont parfaitement isolées et ont un extrait sec de 35 % pour une viscosité de 20 mPas seulement.

### Exemple 2

L'exemple 1 est reproduit à la différence que l'on utilise un homopolymère d'acide acrylique de poids moléculaire d'environ 1000 (Acrysol LMW 10 de ROHM et HAAS).

Les microcapsules obtenues sont parfaitement isolées et ont un extrait sec de 35 % pour une viscosité de 20 mPas seulement.

### Exemple 3

On reproduit l'exemple 1 en utilisant comme homopolymère d'acide acrylique 18 g de Prox A 11 de Protex.

### Exemple 4

On reproduit l'exemple 1 en utilisant une phase organique constituée du mélange suivant :
700 g de Xylylxylène
145 g de Kérosène
20 g de Noir ODB 2 ( noir Pergascript I. 2R®),
8 g de Vert (vert Pergascript I.2 GN®),
8 g de Bleu (bleu Pergascript S.R.B.®),
6 g de Orange (orange Pergascript I.5 R®).

Les produits Pergascript® sont fournis par la société Ciba-Geigy.

Les microcapsules obtenues sont parfaitement isolées et ont un extrait sec de 35 % pour une viscosité de 20 mPas seulement, mais avec une transcription de couleur noire au lieu de bleu.

### Exemple 5

On reproduit l'exemple 4 en utilisant 840 g de palmitate d'isopropyle à la place du Xylylxylène et du Kérosène.

Les microcapsules obtenues sont parfaitement isolées et ont un extrait sec de 35 % pour une viscosité de 20 mPas seulement, mais avec une transcription de couleur noire.

### Exemple 6

On reproduit l'exemple 4 en remplaçant l'alun de chrome par un tanin de chrome masqué de basicité 50 % (Baychrom F® de BAYER).

Les microcapsules obtenues sont parfaitement isolées et ont un extrait sec de 35 % pour une viscosité de 20 mPas seulement, mais avec une transcription de couleur noire.

### Exemple 7

L'exemple 1 est reproduit en remplaçant l'alun de chrome par 17 g d'un complexe de sels d'aluminium, de titane, de magnésium (Synektan Tal® d'ICI) introduit en poudre.

Les microcapsules obtenues sont parfaitement isolées et ont un extrait sec de 36 % pour une viscosité de 20 mPas seulement avec une couleur nettement plus blanche.

### Exemple 8

L'exemple 7 est reproduit avec 170 g d'une solution à 10 % de tanin à base de complexes magnésium aluminium autobasifiant (Cuircotan AM® de CFPI).

Les microcapsules obtenues sont parfaitement isolées et ont un extrait sec de 33 % pour une viscosité de 20 mPas seulement.

## Revendications

1. Procédé de production de microcapsules contenant un liquide hydrophobe, caractérisé en ce qu'il comprend les étapes suivantes :
- formation d'une suspension dans une phase aqueuse acide de particules constituées de gouttelettes dudit liquide hydrophobe, lesdites gouttelettes étant revêtues d'un coacervat formé de gélatine, d'un premier colloïde anionique constitué par un homopolymère d'un acide polyacrylique de poids moléculaire compris entre 500 et 5000 et d'un second colloïde anionique constitué par de la carboxyméthylcellulose possédant une viscosité de 200 à 3000 mPas en solution à 6 % en poids et à 20°C, mesurée au viscosimètre Haake VT 181 avec mobile MVI, et lesdites particules ayant un diamètre de 1 à 12 µm environ, de préférence de 3 à 8 µm.
- refroidissement pour solidifier la paroi,
- réticulation de la gélatine,
- neutralisation.

2. Procédé selon la revendication 1, caractérisé en ce que ladite suspension est obtenue par :
- formation d'une émulsion d'une phase hydrophobe formée d'une solution organique d'un composant hydrophobe, dans une phase aqueuse à un pH compris entre 6 et 10, dans laquelle est dissoute la gélatine, un premier colloïde anionique constitué par l'acide polyacrylique, et éventuellement tout ou partie d'un second colloïde anionique constitué par de la carboxyméthylcellulose,
- coacervation de l'émulsion par acidification en présence dudit second colloïde anionique ou du reste dudit second colloïde anionique lorsque celui-ci n'a pas été utilisé ou seulement en partie dans la formation de la phase aqueuse.

3. Procédé selon la revendication 1, caractérisé en ce que ladite suspension est obtenue par :
- formation en milieu acide d'une phase aqueuse formée de gélatine, dudit premier colloïde anionique constitué par l'acide polyacrylique et éventuellement de tout ou partie du second colloïde anionique constitué par de la carboxyméthylcellulose,
- formation d'une émulsion et desdites particules à partir d'une phase hydrophobe formée d'une solution organique d'un composé d'intérêt dans ladite phase aqueuse, éventuellement en présence dudit second colloïde anionique lorsque celui-ci n'a pas été utilisé ou seulement en partie dans la formation de l'émulsion.

4. Procédé selon la revendication 1, caractérisé en ce que le liquide hydrophobe renferme des composés d'intérêt choisis parmi les colorants (substances chromogènes) les réactifs chimiques, les produits phytosanitaires, les substances actives des médicaments, les parfums.

5. Procédé selon la revendication 4, caractérisé en ce que le colorant de la phase hydrophobe est choisi dans le groupe constitué par les dérivés comme le 3,3-bis(4-diméthylamino-phényl)-6-diméthylamino-phtalide (CVL) et le 3,3-bis(1-octyl-2-méthylindole-3-yle)phtalide ou des dérivés du fluorane comme les 2-anilino-3 méthyl-6 dialkylamino fluorane tels que le 2'-anilino-3'-méthyl-6 dialkylamino fluoranes tels que le 2'-anilino-3'-mèthyl-6-diéthylamino fluorane, le 6'-diméthylamino-2'-(N-éthyl-N-phénylamino-4'-méthylfluorane) et le 3'-chloro-6'-cyclohexylaminofluorane.

6. Procédé selon l'une des revendications 1 à 5, caractérisé en ce que pour 100 parties en poids de gélatine, on utilise :
a) 10 à 30 parties d'acide polyacrylique,
b) 20 à 40 parties de carboxyméthylcellulose.

7. Procédé selon la revendication 6, caractérisé en ce que pour 100 parties en poids de gélatine, on utilise 12 à 20 parties d'acide polyacrylique.

8. Procédé selon la revendication 2 ou 3, caractérisé en ce que le solvant de la phase hydrophobe est choisi dans le groupe constitué par les solvants issus du pétrole, les huiles végétales, les esters d'acides gras, les phtalates, les dérivés terpéniques.

9. Procédé selon l'une des revendications 1 à 3, caractérisé en ce que l'acidification lors de l'étape de coacervation conduit à un pH compris entre 3 et 5.

10. Procédé selon l'une des revendications 1 à 3, caractérisé en ce que l'acidification est assurée par ajout d'acide acétique.

11. Procédé selon la revendication 1, caractérisé en ce que le rapport en poids de l'agent réticulant par rapport à la gélatine est compris entre 10 et 50%.

12. Procédé selon la revendication 11, caractérisé en ce que la réticulation est effectuée en deux étapes :
a) réticulation par le glutaraldéhyde de façon à fixer la structure du coacervat, suivie par la
b) réticulation par un tanin minéral, végétal ou synthétique de façon à durcir les parois des microcapsules et leur conférer la résistance et l'étanchéité désirée.

13. Procédé selon la revendication 12, caractérisé en ce que le rapport en poids du glutaraldéhyde à la gélatine est compris entre 10 et 20 % et le rapport en poids du tanin à la gélatine est compris entre 10 et 40 %.

14. Microcapsules obtenues par le procédé selon l'une des revendications 1 à 13, dont l'extrait sec est compris entre 35 à 40 % en poids.

15. Microparticules selon la revendication 14, caractérisé en ce qu'elles ont un diamètre compris entre 1 et 12 µm, de préférence 3 et 8 µm.

16. Composition de revêtement pour papier sensible à la pression contenant les microcapsules selon l'une des revendications 1 à 15, sous forme isolée, et un véhicule inerte à base d'un liant et/ou d'additifs appropriés.

17. Procédé d'obtention d'un papier copiant sans carbone, caractérisé en ce que l'on couche une composition, contenant les microcapsules obtenues par le procédé selon l'une des revendications 1 à 15 et un véhicule inerte, sur un papier approprié.

## Claims

1. Process for the production of microcapsules comprising a hydrophobic liquid, characterized in that it comprises the following stages:
- formation of a suspension, in an acidic aqueous phase, of particles composed of droplets of the said hydrophobic liquid, the said droplets being coated with a coacervate formed of gelatin, a first anionic colloid consisting of a homopolymer of a polyacrylic acid with a molecular weight of between 500 and 5000, and a second anionic colloid consisting of carboxymethylcellulose possessing a viscosity of 200 to 3000 mPa.s as a 6% by weight solution at 20°C, measured with a Haake VT 181 viscometer with an MVI rotor, the said particles having a diameter of 1 to 12 µm approximately, preferably of 3 to 8 µm,
- cooling in order to solidify the wall,
- crosslinking the gelatin,
- neutralization.

2. Process according to Claim 1 characterized in that the said suspension is obtained by:
- formation of an emulsion of a hydrophobic phase, formed of an organic solution of a hydrophobic component, in an aqueous phase at a pH of between 6 and 10, in which is dissolved gelatin, a first anionic colloid consisting of polyacrylic acid and optionally all or part of a second anionic colloid consisting of carboxymethylcellulose,
- coacervation of the emulsion by acidification in the presence of the said second anionic colloid or of the remainder of the said second anionic colloid when the latter has not been used or has been used only in part in the formation of the aqueous phase.

3. Process according to Claim 1, characterized in that the said suspension is obtained by:
- formation, in acidic medium, of an aqueous phase formed of gelatin, the said first anionic colloid consisting of polyacrylic acid and optionally all or part of the second anionic colloid consisting of carboxymethylcellulose,
- formation of an emulsion and the said particles from a hydrophobic phase, formed of an organic solution of a compound of interest, in the said aqueous phase, optionally in the presence of the said second anionic colloid when the latter has not been used or has been used only in part in the formation of the emulsion.

4. Process according to Claim 1, characterized in that the hydrophobic liquid includes compounds of interest chosen from colorants (chromogenic substances), chemical reactants, plant-protection products, active substances of medicaments, or fragrances.

5. Process according to Claim 4, characterized in that the colorant of the hydrophobic phase is chosen from the group composed of derivatives such as 3,3-bis (4-(dimethylamino)phenyl)-6-(dimethylamino)phthalide (CVL) and 3,3-bis(1-octyl-2-methylindol-3-yl)phthalide or fluoran derivatives, such as 2-anilino-3-methyl-6-(dialkylamino)fluorans, such as 2'-anilino-3'-methyl-6-(dialkylamino)fluorans, such as 2'-anilino-3'-methyl-6-(diethylamino)fluoran, 6'-dimethylamino-2'-(N-ethyl-N-phenylamino)-4'-methylfluoran and 3'-chloro-6'-(cyclohexylamino)fluoran.

6. Process according to one of Claims 1 to 5, characterized in that, per 100 parts by weight of gelatin, use is made of:
a) 10 to 30 parts of polyacrylic acid,
b) 20 to 40 parts of carboxymethylcellulose.

7. Process according to Claim 6, characterized in that, per 100 parts by weight of gelatin, use is made of 12 to 20 parts of polyacrylic acid.

8. Process according to Claim 2 or 3, characterized in that the solvent of the hydrophobic phase is chosen from the group consisting of solvents resulting from petroleum, of vegetable oils, of fatty acid esters, of phthalates or of terpene derivatives.

9. Process according to one of Claims 1 to 3, characterized in that the acidification during the coacervation stage results in a pH of between 3 and 5.

10. Process according to one of Claims 1 to 3, characterized in that the acidification is provided for by addition of acetic acid.

11. Process according to Claim 1, characterized in that the ratio by weight of crosslinking agent with respect to gelatin is between 10 and 50%.

12. Process according to Claim 11, characterized in that the crosslinking is carried out in two stages:
a) crosslinking by glutaraldehyde, so as to fix the structure of the coacervate, followed by
b) crosslinking by an inorganic, vegetable or synthetic tannin, so as to cure the walls of the microcapsules and to confer on them the desired strength and the desired leaktightness.

13. Process according to Claim 12, characterized in that the ratio by weight of glutaraldehyde to gelatin is between 10 and 20% and the ratio by weight of tannin to gelatin is between 10 and 40%.

14. Microcapsules obtained by the process according to one of Claims 1 to 13, the solids content of which is between 35 and 40% by weight.

15. Microcapsules according to Claim 14, characterized in that they have a diameter of between 1 and 12 µm, preferably 3 and 8 µm.

16. Invert coating composition for pressure-sensitive paper comprising the microcapsules according to one of Claims 1 to 15, in the isolated form, and a vehicle based on a binder and/or on additives which are appropriate.

17. Process for producing a carbonless copy paper, characterized in that an inert composition comprising the microcapsules obtained by the process according to one of Claims 1 to 15 and a vehicle is coated onto an appropriate paper.

## Patentansprüche

1. Verfahren zur Herstellung von Mikrokapseln, welche eine hydrophobe Flüssigkeit enthalten, dadurch gekennzeichnet, daß es folgende Stufen umfaßt:
- Bildung einer Suspension in einer sauren, wäßrigen Phase von Partikeln, die aus Tröpfchen der hydrophoben Flüssigkeit besteht, wobei die Tröpfchen mit einem Koazervat umhüllt sind, welches aus Gelatine, einem ersten anionischen Kolloid, welches durch ein Homopolymer einer Polyacrylsäure mit einem Molekulargewicht zwischen 500 und 5000 gebildet wird, und einem zweiten anionischen Kolloid, welches durch Carboxymethylzellulose gebildet wird, welche in einer 6 Gew.-%igen Lösung und bei 20 °C eine Viskosität von 200 bis 3000 mPas, gemessen mit einem Haake VT 181-Viskosimeter mit mobiler MVI, besitzt, gebildet ist, und wobei die Partikel einen Durchmesser von etwa 1 bis 12 µm, bevorzugt 3 bis 8 µm aufweisen,
- Abkühlen zum Verfestigen der Umhüllung,
- Vernetzen der Gelatine,
- Neutralisieren.

2. Verfahren gemäß Anspruch 1, dadurch gekennzeichnet, daß die Suspension erhalten wird durch:
- Bildung einer Emulsion aus einer hydrophoben Phase, welche aus einer organischen Lösung einer hydrophoben Zusammensetzung gebildet ist, in einer wäßrigen Phase mit einem pH-Wert zwischen 6 und 10, in der die Gelatine, ein erstes anionisches Kolloid, welches durch Polyacrylsäure gebildet ist, und gegebenenfalls die Gesamtmenge oder ein Teil eines zweiten anionischen Kolloids aus Carboxymethylzellulose, gelöst sind,
- Koazervierung der Emulsion durch Ansäuern in Gegenwart des zweiten anionischen Kolloids oder des Restes des zweiten anionischen Kolloids, wenn dieses nicht oder nur teilweise bei der Bildung der wäßrigen Phase verbraucht wurde.

3. Verfahren gemäß Anspruch 1, dadurch gekennzeichnet, daß die Suspension erhalten wird durch:
- Bildung, in saurem Milieu, einer wäßrigen Phase aus Gelatine, dem ersten anionischen Kolloid, welches aus Polyacrylsäure besteht, und gegebenenfalls ganz oder teilweise dem zweiten anionischen Kolloid aus Carboxymethylzellulose,
- Bildung einer Emulsion und der Partikel ausgehend von einer hydrophoben Phase, die aus einer organischen Lösung mit einer interessierenden Zusammensetzung in der wäßrigen Phase gebildet ist, gegebenenfalls in Gegenwart des zweiten anionischen Kolloids, wenn dieses nicht oder nur teilweise bei der Bildung der Emulsion verbraucht wurde.

4. Verfahren gemäß Anspruch 1 dadurch gekennzeichnet, daß die hydrophobe Flüssigkeit interessierende Zusammensetzungen, nämlich Farbstoffe (chromogene Substanzen), chemische Reagenzien, Pflanzenschutzprodukte, Arzeneimittelwirkstoffe und/oder Duftstoffe einschließt.

5. Verfahren gemäße Anspruch 4, dadurch gekennzeichnet, daß es sich bei dem Farbstoff der hydrophoben Phase um die Derivate, 3,3-Bis(4-dimethylaminophenyl)-6-dimethylaminophthalid (CVL) und/oder 3,3-Bis(1-octyl-2-methylindol-3-yl)phthalid oder Fluoranderivate, wie 2-Anilin-3 methyl-6 dialkylaminofluorane, wie 2'-Anilin-3'-methyl-6 dialkylaminofluorane, wie 2'-Anilin-3'-methyl-6-diethylaminofluoran, 6'-Dimethylamino-2'-(N-ethyl-N-phenylamino-4'-methylfluoran) und/oder 3'-Chlor-6'-cyclohexylaminofluoran handelt.

6. Verfahren nach einem der Ansprüche 1 bis 5, dadurch gekennzeichnet, daß man für 100 Gewichtsteile Gelatine
a) 10 bis 30 Teile Polyacrylsäure,
b) 20 bis 40 Teile Carboxymethylzellulose verwendet.

7. Verfahren gemäß Anspruch 6, dadurch gekennzeichnet, daß man für 100 Gewichtsteile Gelatine 12 bis 20 Teile Polyacrylsäure verwendet.

8. Verfahren gemäß Anspruch 2 oder 3, dadurch gekennzeichnet, daß man als Lösungsmittel der hydrophoben Phase von Erdöl abgeleitete Lösungsmittel, Pflanzenöle, Fettsäureester, Phthalate und/oder terpenische Derivate auswählt.

9. Verfahren nach einem der Ansprüche 1 bis 3, dadurch gekennzeichnet, daß das Ansäuern in der Stufe der Koazervierung zu einem pH-Wert zwischen 3 und 5 führt.

10. Verfahren nach einem der Ansprüche 1 bis 3, dadurch gekennzeichnet, daß das Ansäuern durch Zugabe von Essigsäure gesichert wird.

11. Verfahren gemäß Anspruch 1, dadurch gekennzeichnet, daß das Gewichtsverhältnis von Vernetzungsmittel zu Gelatine zwischen 10 und 50 % beträgt.

12. Verfahren gemäß Anspruch 11, dadurch gekennzeichnet, daß die Vernetzung in zwei Stufen bewirkt wird:
a) Vernetzung durch Glutaraldehyd, um die Struktur des Koazervats zu fixieren, und anschließend,
b) Vernetzung durch einen mineralischen, pflanzlichen oder synthetischen Gerbstoff, um die Wände der Mikrokapseln zu härten und ihnen die gewünschte Widerstandsfähigkeit und Wasserdichtigkeit zu verleihen.

13. Verfahren gemäß Anspruch 12, dadurch gekennzeichnet, daß das Gewichtsverhältnis von Glutaraldehyd zu Gelatine zwischen 10 und 20 % und das Gewichtsverhältnis von Gerbstoff zu Gelatine zwischen 10 und 40 % beträgt.

14. Mikrokapseln, welche durch das Verfahren nach einem der Ansprüche 1 bis 13 erhalten werden, deren Trockenextrakt zwischen 35 und 40 Gew.-% liegt.

15. Mikropartikel gemäß Anspruch 14, dadurch gekennzeichnet, daß sie einen Durchmesser zwischen 1 und 12 µm, bevorzugt 3 und 8 µm, aufweisen.

16. Überzugszusammensetzung für druckempfindliches Papier, welche die Mikrokapseln gemäß einem der Ansprüche 1 bis 15 in isolierter Form und einen inerten Träger (Vehikel) auf Basis eines Bindemittels und/oder geeignete Zusatzstoffe enthält.

17. Verfahren zur Herstellung von kohlenstoffreiem Kopierpapier, dadurch gekennzeichnet, daß man eine Zusammensetzung, welche die Mikrokapseln, die durch das Verfahren nach einem der Ansprüche 1 bis 15 erhalten wurden, und einen inerten Träger enthält, auf ein geeignetes Papier aufbringt.
